(19) Europäisches Patentamt
European Patent Office
Office européen des brevets

(11) **EP 0 754 143 B1**

(12) **FASCICULE DE BREVET EUROPEEN**

(45) Date de publication et mention
de la délivrance du brevet:
**04.03.1998 Bulletin 1998/10**

(21) Numéro de dépôt: **95915219.0**

(22) Date de dépôt: **29.03.1995**

(51) Int. Cl.$^6$: **B64G 1/32**, B64G 1/24

(86) Numéro de dépôt international:
**PCT/FR95/00393**

(87) Numéro de publication internationale:
**WO 95/26905 (12.10.1995 Gazette 1995/43)**

(54) **SATELLITE ARTIFICIEL MUNI DE GENERATEURS DE MOMENTS MAGNETIQUES ET AERODYNAMIQUES ET PROCEDE DE COMMANDE D'UN TEL SATELLITE**

KÜNSTLICHER SATELLIT MIT AERODYNAMISCHEN UND MAGNETISCHEN DREHMOMENTGEBERN UND STEUERUNGSVERFAHREN FÜR EINEN DERARTIGEN SATELLITEN

ARTIFICIAL SATELLITE HAVING MAGNETIC AND AERODYNAMIC MOMENT GENERATORS, AND METHOD FOR CONTROLLING SAME

(84) Etats contractants désignés:
**DE FR GB IT NL SE**

(30) Priorité: **30.03.1994 FR 9403765**

(43) Date de publication de la demande:
**22.01.1997 Bulletin 1997/04**

(73) Titulaire:
**CENTRE NATIONAL D'ETUDES SPATIALES
F-75039 Paris Cedex 01 (FR)**

(72) Inventeur: **DUCHON, Paul
F-31810 Venerque (FR)**

(74) Mandataire:
**Ilgart, Jean-Christophe
c/o Société de Protection des Inventions,
25, rue de Ponthieu
75008 Paris (FR)**

(56) Documents cités:
**FR-A- 2 525 359          US-A- 3 145 948
US-A- 3 390 848          US-E- R E29 177**

•  **PROCEEDINGS OF AOCS CONFERENCE, 6
Octobre 1977, NOORDWIJK (THE
NETHERLANDS) pages 103 - 110 LACOMBE
'MAGNETOTORQUING FOR THE ATTITUDE
CONTROL OF GEOSTATIONARY SATELLITES'**

## Description

L'invention se rapporte à un satellite artificiel équipé de moyens de création de moments d'origine à la fois magnétique et aérodynamique, et à un procédé de commande d'un tel satellite.

Elle doit être rapprochée du sujet du brevet français dont la demande a été enregistrée sous le n°9304953 et qui décrit un satellite artificiel muni de gouvernes aérodynamiques d'orientation et parcourant une orbite basse ou très basse, c'est-à-dire dont l'altitude, ou l'altitude de l'apogée si l'orbite est elliptique, est inférieure à 600 km dans le cas de la Terre. L'emploi de l'invention est encore concevable pour d'autres planètes, à condition qu'elles comportent une atmosphère. En effet, les gaz raréfiés des hautes couches de l'atmosphère, et qui se composent essentiellement d'oxygène atomique pour la Terre, peuvent exercer des moments de rotation sur le satellite. Les gouvernes aérodynamiques, qui exploitent cette circonstance, consistent en des panneaux tournants qui sont orientés pour opposer une section plus ou moins importante à l'écoulement ou lui fournir une direction oblique et variable de fuite. Il est possible de produire des moments de n'importe quelle direction en fonction de la disposition des panneaux et de leur orientation. On parvient donc à régler l'orientation du satellite pour maintenir contre toutes les influences perturbatrices le pointage d'instruments ou de détecteurs vers un objectif ou de cellules photovoltaïques vers le Soleil.

Les gouvernes aérodynamiques présentent l'avantage d'économiser l'ergol embarqué par rapport aux propulseurs ou aux moyens du même genre utilisés habituellement pour déplacer et orienter les satellites, mais elles en consomment tout de même, directement pour les mouvoir et indirectement pour compenser les effets de traîne dont elles sont cause. C'est pourquoi, tout en appréciant ces moyens, on peut désirer réduire leur nombre ou ménager leur emploi.

L'idée directrice de l'invention consiste donc à combiner les gouvernes aérodynamiques à d'autres moyens, qui sont des magnéto-coupleurs ou générateurs de couples magnétiques alimentés en énergie renouvelable par des cellules photovoltaïques et ayant la faculté de produire des moments de rotation en présence d'un champ magnétique ambiant tel que le champ magnétique terrestre, selon la formule

$$\vec{C} = \vec{M} \wedge \vec{B}$$

où $\vec{C}$ est un couple en newtons-mètres, $\vec{M}$ un moment magnétique en ampères-tours/mètres carrés et $\vec{B}$ est un champ magnétique en tesla. Une conséquence néfaste de cette formule est que les couples autour de la direction du champ magnétique ambiant ne pourront pas être produits. C'est pour cette raison en particulier qu'on aura recours aux gouvernes aérodynamiques bien qu'elles puissent aussi être utilisées comme moyens de complément de couples magnétiques produits autour d'autres axes.

On connaît encore des satellites sur lesquels les coupleurs magnétiques sont utilisés soit isolément, soit en complément de systèmes d'orientation tels que des roues de réaction ou des roues cinétiques quand celles-ci arrivent à saturation, mais il semble que les gouvernes aérodynamiques orientables n'aient jamais été proposées sauf dans la demande mentionnée plus haut et récente du même inventeur.

Les gouvernes aérodynamiques produiront des couples et des rotations autour de deux des axes principaux du satellite, dont l'orientation sera choisie en fonction de la position de l'orbite par rapport au champ magnétique de la Terre ou de la planète considérée. Les coupleurs magnétiques produiront des moments autour des trois axes principaux du satellite. Le système d'orientation sera alors pourvu de moyens concurrents, mais qui ne seront pas superflus car le satellite parcourant l'orbite et dirigé dans une direction invariable ne sera jamais à une orientation fixe par rapport à la direction du champ de sorte que les coupleurs magnétiques seront tous utiles à tour de rôle, et il est si avantageux de recourir à eux qu'on le fera de préférence aux gouvernes même si l'effet de certains est faible.

Pour résumer, l'invention concerne sous sa forme la plus générale un satellite artificiel, caractérisé en ce qu'il comprend des générateurs magnétiques de production de moments de rotation autour de trois axes principaux du satellite, et des panneaux extérieurs tournants pour fournir des moments aérodynamiques de rotation autour de deux des axes principaux selon le type du satellite et d'orbite du satellite en fonction de lois de commande associant les générateurs magnétiques et les panneaux pour leur faire produire des moments variables ; et elle est aussi relative à un procédé utilisable pour un tel satellite en orbite autour d'une planète et plongé dans une atmosphère et un champ magnétique, caractérisé en ce qu'il consiste à mesurer ou estimer périodiquement le champ magnétique de la planète par rapport aux axes principaux du satellite et à calculer des moments de rotation à produire autour des axes principaux par les générateurs magnétiques et les panneaux extérieurs.

L'invention va maintenant être décrite plus précisément par plusieurs réalisations à l'aide des figures suivantes, annexées à titre illustratif et non limitatif :

- la figure 1 représente un système de coupleurs magnétiques,
- la figure 2 représente un satellite sur une orbite particulière sur laquelle l'invention est appliquée,
- la figure 3 représente un satellite différent, adapté à parcourir une autre orbite,

- la figure 4 représente un satellite analogue au précédent sur un troisième genre d'orbite,
- la figure 5 illustre la commande des gouvernes aérodynamiques,
- la figure 6 est une représentation graphique de courbes symbolisant la commande des gouvernes, et
- la figure 7 illustre l'agencement des gouvernes aérodynamiques.

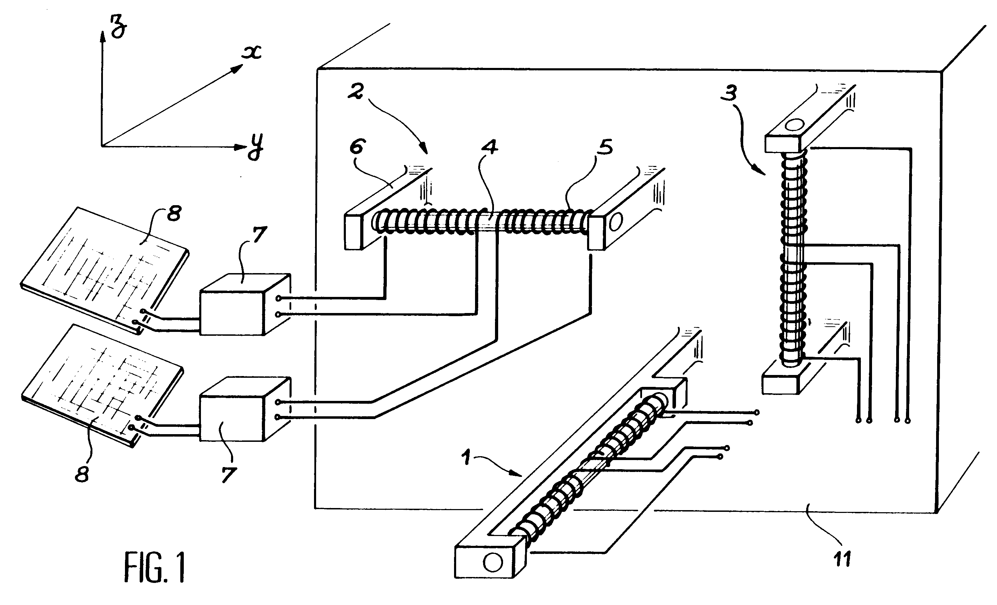

La figure 1 représente des coupleurs magnétiques 1, 2 et 3 tous semblables par leur constitution et composés d'un noyau 4 ferromagnétique cylindrique autour duquel deux bobinages électriques 5 et 6 enroulent leurs spires. Les bobinages 5 et 6 sont reliés à des batteries 7 elles-mêmes alimentées par des cellules photovoltaïques 8 garnissant des panneaux exposés au Soleil du satellite. Les coupleurs magnétiques 1, 2 et 3 ont leurs noyaux 4 orientés respectivement suivant trois axes principaux du satellite, X, Y et Z, tous perpendiculaires entre eux.

Un seul des bobinages 5 et 6 est en principe utilisé à la fois, l'autre est supplétif et fournit une redondance en cas d'avarie sur le premier. Quand du courant circule dans les bobinages 5 et 6, un champ magnétique représentatif d'un moment magnétique dipolaire $\vec{M}$ est induit dans l'axe du noyau 4 concerné. Un couple mécanique $\vec{C}$ est alors produit dans le noyau 4 pour l'aligner avec la direction du champ magnétique ambiant $\vec{B}$, selon la formule rencontrée plus haut $\vec{C} = \vec{M} \wedge \vec{B}$. Ce couple est transmis au satellite, auquel les noyaux 4 sont assujettis, pour le faire tourner tout entier. Remarquons que ces coupleurs magnétiques 1, 2 et 3 sont inopérants quand leur noyau 4 est orienté selon le champ ambiant $\vec{B}$.

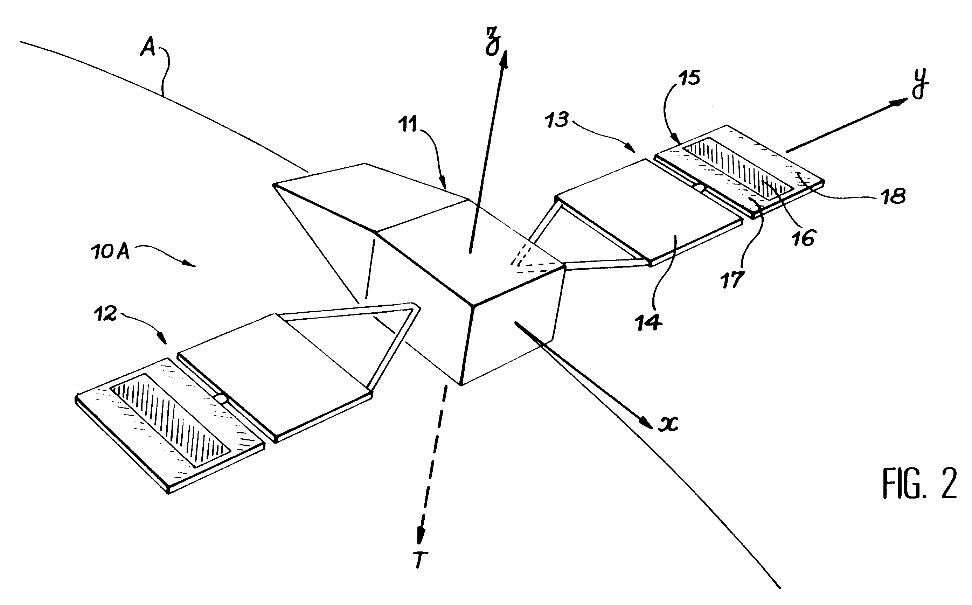

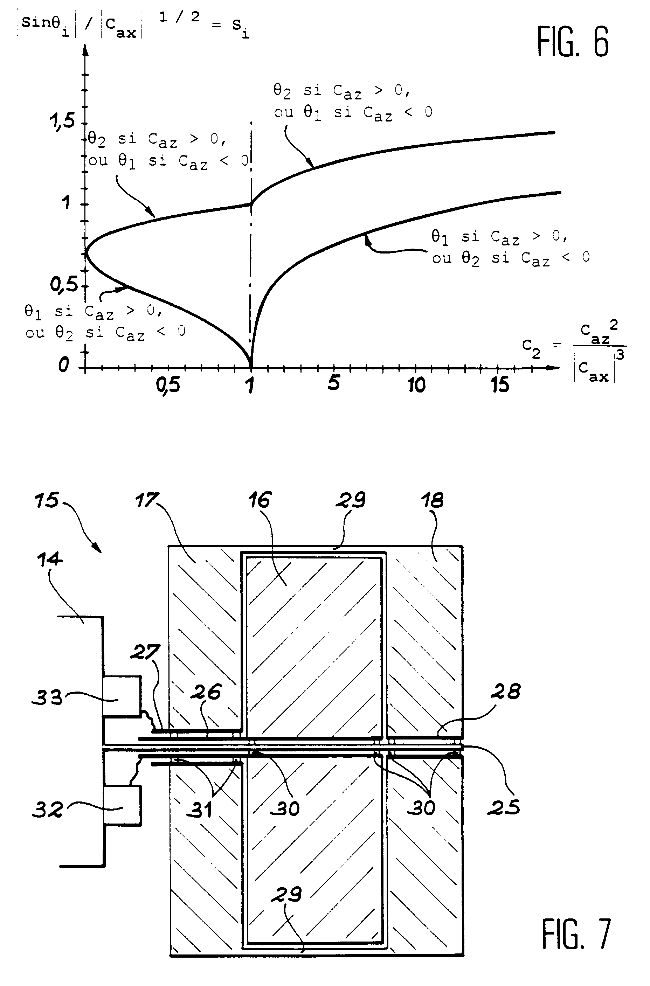

On a représenté sur la figure 2 un satellite 10A porteur des coupleurs magnétiques 1, 2 et 3, qu'on supposera logés dans un corps central 11 du satellite 10A duquel dépassent deux mâts 12 et 13 qui sont déployés quand le satellite 10A est libéré de la fusée de lancement et mis en orbite. Les mâts 12 et 13 sont semblables, alignés et situés des deux côtés du corps central 11, et ils portent en s'éloignant de celui-ci un panneau solaire 14, porteur des cellules photovoltaïques 8 évoquées ci-dessus, puis une gouverne aérodynamique 15 composée d'un panneau central 16 et de deux panneaux extrêmes 17 et 18 qui encadrent le précédent. Les panneaux extrêmes 17 et 18 sont en fait des demi-panneaux tournant à l'unisson autour d'un axe dans l'extension des mâts 12 et 13 et qui correspond ici à l'axe de tangage Y du satellite 10A, et le panneau central 16 tourne autour du même axe indépendamment des précédents. L'axe de rotation est matérialisé par des arbres creux portant les panneaux et tournant dans un arbre fixe de support pointant de l'extrémité du panneau solaire 14. Ce système mécanique simple est représenté sur la figure 7. L'arbre fixe porte la référence 25, les arbres creux de panneaux 16 à 18 les références 26 à 28 respectivement ; on désigne par 29 les tiges qui relient les panneaux extrêmes 17 et 18 entre eux, au-delà des bords du panneau central 16 ; par 30 les paliers qui permettent aux arbres creux 26 et 28 d'être portés par l'arbre creux 29 ; par 31 les paliers qui permettent à l'arbre creux 27 d'être porté par l'arbre creux 26 ; et par 32 et 33 les systèmes de moteurs électriques et de transmissions qui meuvent respectivement les arbres creux 26 et 27 et font donc tourner indépendamment le panneau central 16 et les panneaux extrêmes 17 et 18 respectivement, en prenant appui sur le panneau solaire 14.

Les panneaux de gouverne 16 à 18 sont disposés symétriquement sur l'autre des mâts 12 et 13 tout en ayant des dimensions identiques à leurs homologues et en étant mus par des systèmes indépendants des précédents.

Il faut enfin relever que les panneaux centraux 16 ont une surface égale à la somme de celle des panneaux extrêmes 17 et 18.

Le satellite 10A parcourt une orbite A à laquelle l'axe de roulis X est tangent et orienté en sens inverse du parcours du satellite. L'axe de lacet Z appartient au plan de l'orbite A et est opposé à la direction T du centre de la Terre. L'axe de tangage Y est par conséquent perpendiculaire au plan de l'orbite A, ainsi que les mâts 12 et 13, et dirigé pour rendre le repère X, Y et Z direct. Dans le cas présent, l'orbite A est une orbite héliosynchrone à 12 et 24 heures locales, qui passe presque au-dessus des pôles de la Terre car le plan orbital fait un angle d'environ 100° avec le plan équatorial. Le champ magnétique terrestre $\vec{B}$ est alors presque parallèle au plan orbital, à 20° près environ. Ce résultat est valable pour toutes les orbites quasi polaires.

On s'aperçoit qu'une rotation de roulis autour de l'axe X peut être commandée en changeant l'orientation du panneau central 16 ou des panneaux extrêmes 17 et 18, au choix, d'un des mâts 12 et 13 et en imposant une rotation correspondante en direction opposée aux panneaux semblables sur l'autre mât 13 ou 12, à partir de la position neutre où tous les panneaux s'étendent dans un plan parallèle à celui qui est tangent à l'orbite 1. L'accroissement de résistance à l'air raréfié qui est ainsi produit se traduit par des forces dirigées suivant l'axe de lacet Z, excentrées en sens opposés et dont la valeur dépend de l'importance de l'inclinaison. Des forces de traînée suivant l'axe de roulis X sont également produites, qui ne créent pas de moment puisqu'elles sont égales et de même sens mais freinent le satellite 10A et nécessitent d'utiliser de l'énergie pour le maintenir à la vitesse voulue, ce qui explique qu'on préfère ne pas abuser de ce moyen. Si cependant on déplace les panneaux de gouverne 16, 17 et 18 d'un seul des mâts 12 et 13 d'angles égaux dans des directions opposées à partir de la position neutre de ces panneaux (dans le plan de l'orbite A), une rotation autour de l'axe de lacet Z est produite car le satellite est freiné du côté de ce mât 12 ou 13 seulement, et aucune autre rotation n'est produite car le panneau central 16 a une surface égale à la surface totale des panneaux extrêmes 17 et 18, si bien que les forces orientées dans l'axe de lacet Z s'annulent. Les gouvernes aérodynamiques 15 permettent donc de communiquer des rotations de roulis et de lacet au satellite 10A. Les rotations de tangage seront assurées par les coupleurs magnétiques uniquement, ce qui est toujours possible puisque l'axe de tangage 10 reste perpendiculaire ou presque à la direction du champ magnétique terrestre B, quelle que soit la position du satellite 10A sur l'orbite A. Les coupleurs magnétiques 1, 2 et 3 peuvent aussi exercer des moments de roulis et de lacet de valeur variable selon la position du satellite 10A : le moment de lacet d'origine magnétique sera presque nul au-dessus des pôles, le moment de roulis presque nul aux noeuds ascendant et descendant de l'orbite A, et les deux moments seront mieux répartis aux latitudes intermédiaires ; l'action des gouvernes aérodynamiques 15 suppléera aux moments défaillants d'origine magnétique.

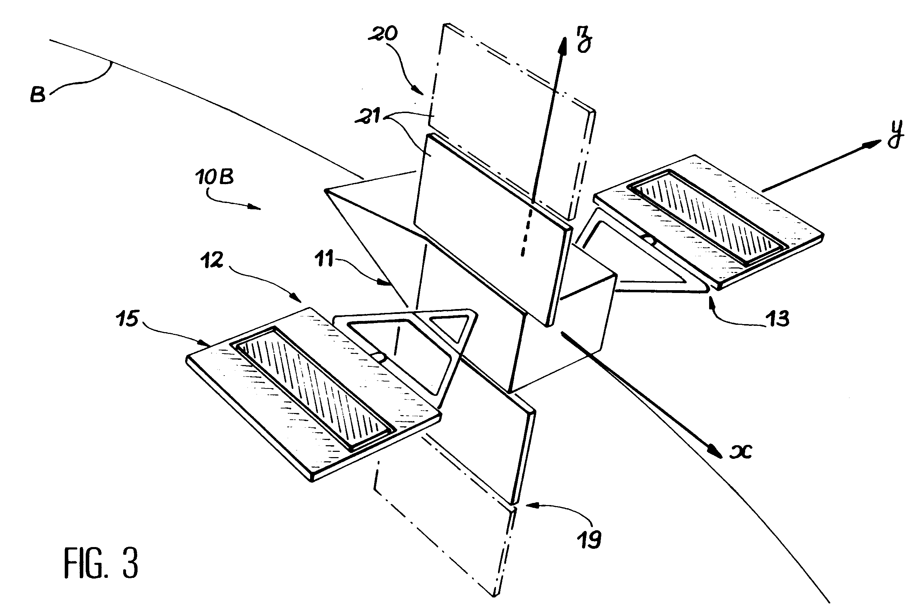

On passe maintenant à la figure 3, qui représente un satellite 10B équipé pour parcourir une orbite héliosynchrone à 6 heures et 18 heures locale. L'orbite B est encore quasi polaire et à une inclinaison d'environ 100° sur le plan équatorial. La situation n'est pas fondamentalement différente de la précédente, et on retrouve un corps central 11 duquel se dressent des mâts 12 et 13 porteurs de gouvernes aérodynamiques semblables aux précédentes pour assurer les mouvements de roulis et de lacet du satellite 10B. La différence principale consiste en des mâts supplémentaires 19 et 20 porteurs de panneaux solaires 21 qui remplacent les panneaux solaires 14. Les mâts supplémentaires 19 et 20 s'étendent suivant l'axe de lacet Z et les panneaux solaires 21 sont orientés dans la direction de l'axe de tangage Y et vers le Soleil, dont la direction est presque perpendiculaire à celle du plan orbital, contrairement à la réalisation précédente.

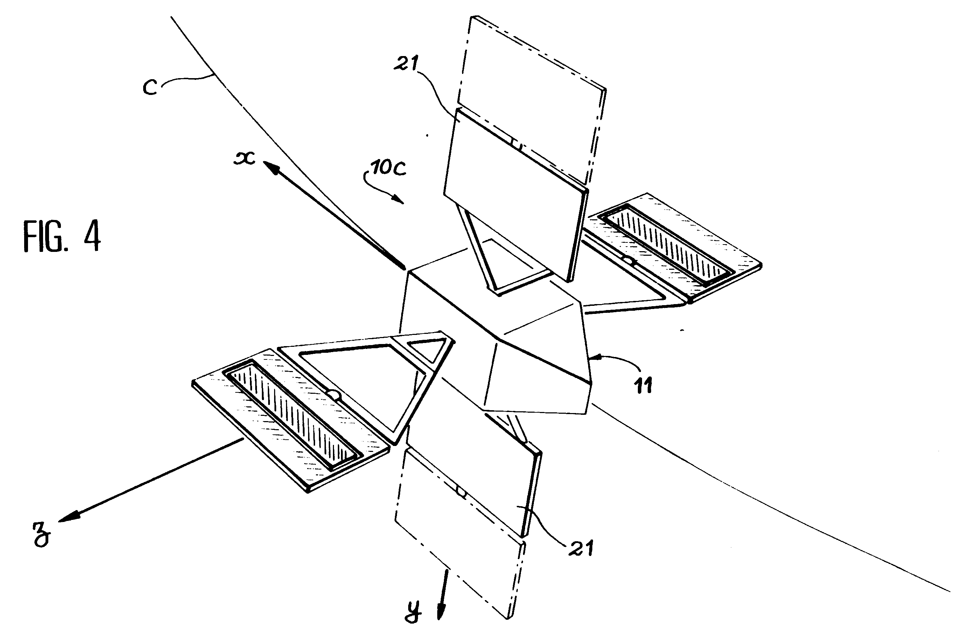

C'est une orbite C dans un plan équatorial qui est illustrée à la figure 4. Le satellite 10B comprend des mâts 12, 13, 19 et 20 identiques à la réalisation précédente, c'est-à-dire porteurs de panneaux de gouverne 16, 17 et 18 uniquement pour les uns, et des panneaux solaires 21 pour les autres. Toutefois, les panneaux de gouverne 16, 17 et 18 s'étendent le long de l'axe de lacet Z et sont dirigés dans l'axe de tangage Y, alors que l'inverse est vrai pour les panneaux solaires 21. Avec une telle orbite, on peut produire des moments magnétiques autour des axes de roulis X et de lacet Z mais pratiquement pas autour de l'axe de tangage Y qui est sensiblement parallèle au champ magnétique terrestre. Mais les gouvernes aérodynamiques 15 permettent ici de produire des moments autour de l'axe de tangage Y et de l'axe de roulis X en les inclinant des mêmes façons que dans les réalisations précédentes. Pour ce dernier axe, il y aura donc une concurrence des deux moyens d'orientation, qui sera résolue en utilisant avant tout le coupleur magnétique, pour les raisons déjà signalées d'économie de combustible.

On va maintenant passer au mode de commande des différents appareils. Concrètement, on utilise un ordinateur de bord, chargé de régler la fourniture de courant aux coupleurs magnétiques 1, 2 et 3 et aux moteurs 32 et 33, et qui fonctionne avec un logiciel qui calcule à tout moment l'orientation du champ magnétique terrestre $\vec{B}$ par rapport au satellite 10. Pour cela, le satellite peut comporter un magnétomètre qui fournit cette mesure, mais il est encore possible de modéliser la direction du champ magnétique selon ses composantes par rapport aux axes principaux du satellite 10 en fonction du temps, c'est-à-dire du parcours de l'orbite. On suppose qu'aucun défaut important d'orientation n'apparaît et que les axes de roulis, tangage et lacet restent tangents à l'orbite et à des positions invariables par rapport à l'orbite.

Un exemple de modélisation du champ magnétique terrestre, déjà utilisé sur les satellites SPOT pour une autre fonction (désaturer des roues d'inertie), est donné par les formules suivantes pour une orbite héliosynchrone, conformément à la figure 2 :

$$B_X \approx -B_0 . \cos \omega_0 t$$
$$B_y \approx 0$$
$$B_z \approx -2B_0 . \sin \omega_0 t ,$$

où $B_O$ est la valeur du champ magnétique terrestre à l'altitude considérée ($2,5.10^{-5}$ tesla à 600 kilomètres) et $\omega_0 t$ la position angulaire du satellite 10 sur l'orbite en prenant pour origine le noeud ascendant. Cette modélisation est assez imprécise car elle revient à supposer que l'orbite et le champ sont parfaitement polaires. Il faut modéliser le champ avec des harmoniques supplémentaires (n=3 et n=5) pour parvenir à des erreurs réellement faibles, de l'ordre de 1%, alors qu'elle est de 20% à 30% avec ce seul premier harmonique.

Si dans ces conditions les moments magnétiques dipolaires créés par les coupleurs magnétiques 1, 2 et 3 ont pour valeur $M_x$, $M_y$ et $M_z$, les couples magnétiques produits dans les trois directions principales sont donnés par les équations suivantes :

$$\bar{C}M \begin{cases} C_{Mx} &= M_yB_z - M_zB_y \\ C_{My} &= M_zB_x - M_xB_z \\ C_{Mz} &= M_xB_y - M_yB_x \end{cases}$$

Le couple total

$$\vec{C} = \vec{C}_M + \vec{C}_A$$

produit sur le satellite 10 est la somme vectorielle du couple magnétique et du couple aérodynamique. Cette équation peut être décomposée sur chacun des axes

$$C_x = C_{Mx} + C_{Ax} \quad ; \quad C_y = C_{My} + C_{Ay} \quad ; \quad C_z = C_{Mz} + C_{Az})$$

et, comme on l'a déjà mentionné, le couple aérodynamique $C_{Ay}$ autour de l'axe de tangage Y est nul, c'est-à-dire que

$$C_{MY} = C_Y .$$

Comme en plus on désire que la valeur globale du couple aérodynamique soit la plus petite possible, il est souhaitable que les vecteurs $\vec{C}_A$ et $\vec{C}_M$ soient perpendiculaires, et on en déduit les relations suivantes qui donnent finalement $C_{MX}$ et $C_{MZ}$ :

$$\vec{C}_M . \vec{B} = 0, \text{ soit } C_{Mx} . B_x \ + \ C_{My} . B_y \ + \ C_{Mz} . B_z \ = \ 0$$

$$d'où \ C_{Mx}B_x \ + \ C_{Mz}B_z \ = \ -C_yB_y .$$

$$Et \ \vec{C}_A . \vec{U} = 0, \text{ où } \vec{U} \begin{pmatrix} +B_z \\ 0 \\ -B_x \end{pmatrix},$$

$$\text{soit} \quad (C_{Mx} - C_x) . (-B_z) + (C_{Mz} - C_z) . B_x \ = \ 0$$

Il faut encore que le moment dipolaire total $\vec{M}$ soit orthogonal à la fois à $\vec{B}$ et $\vec{C}_M$ pour que l'action des coupleurs magnétiques 1, 2 et 3 soit la plus efficace, soit

$$\vec{M} = \frac{\vec{B} \wedge \vec{C}_M}{\left\| \vec{B} \right\|^2}$$

et finalement :

$$\vec{M}\begin{cases} M_X = \left[ B_yC_z - B_zC_y - B_yB_z\left(\dfrac{\vec{B}.\vec{C}}{D}\right) \right] \Big/ \left\| \vec{B} \right\|^2 \\[2em] M_y = \left[ B_zC_x - B_xC_z \right] \Big/ \left\| \vec{B} \right\|^2 \\[2em] M_z = \left[ B_xC_y - B_yC_x + B_xB_y\left(\dfrac{\vec{B}.\vec{C}}{D}\right) \right] \Big/ \left\| \vec{B} \right\|^2 \end{cases} \qquad (I)$$

où $D = B_x{}^2 + B_z{}^2$ et

$$\vec{B}.\vec{C} = B_xC_x + B_yC_y + B_zC_z.$$

Et dans ces conditions, les gouvernes de roulis et lacet devront être capables de produire un couple aérodynamique $\vec{CA}$ tel que

$$\left[ \vec{CA} \right] = \begin{bmatrix} B_x \\ 0 \\ B_z \end{bmatrix} . \left[ \frac{(\vec{B}.\vec{C})}{D} \right] \qquad (II)$$

Conformément à ces notations et à la figure 1, les coupleurs magnétiques 1, 2 et 3 dont les noyaux 4 sont alignés avec les axes X, Y et Z produisent respectivement les moments magnétiques $M_x$, $M_y$ et $M_z$.

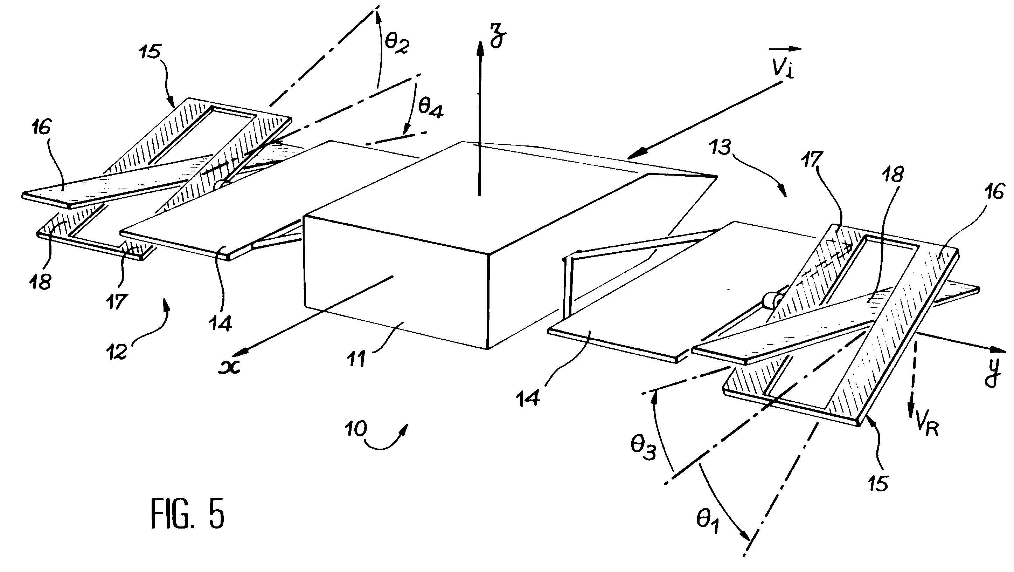

Si maintenant on choisit les notations de la figure 5, à savoir $\theta_1$ à $\theta_4$ pour décrire les basculements des panneaux des gouvernes aérodynamiques 15 depuis la position neutre correspondant à l'extension des panneaux dans le plan de l'orbite où i=1 et i=3 pour les panneaux extrêmes 17 et 18 des mâts 13 et 12 respectivement, et i=2 et i=4 pour les panneaux centraux 16 des mâts 13 et 12 respectivement avec $\theta_1$ et $\theta_4$ positifs et $\theta_2$ et $\theta_3$ négatifs dans la représentation de la figure 5, $\vec{V_i}$ pour décrire la vitesse incidente des atomes de gaz sur le satellite 10 et les panneaux de gouverne, $V_r$ la vitesse des atomes réfléchis (qui dépend de l'angle $\theta_i$) sur un des panneaux, $\rho$ la masse volumique de l'atmosphère, S la surface d'un des panneaux, l'impulsion $\vec{F}\,dt$ produite sur le panneau par une masse de gaz dm pendant un temps dt est égale à $\mathbf{F}dm(\vec{V_i}-\vec{V_r})$, ou, perpendiculairement au panneau,

$$Fdt = dm.2V.\sin\theta_i.$$

V désigne le module du vecteur de vitesse incidente $\vec{V_i}$, soit

$$\left\| \vec{V_i} \right\| = V.$$

On suppose de plus que la réflexion des atomes de gaz est spéculaire, c'est-à-dire que le vecteur $\vec{V_r}$ de la vitesse des particules réfléchies fait un angle $\theta_i$ avec le panneau de gouverne qu'il quitte, ce qui correspond aux conditions des chocs élastiques où l'énergie cinétique n'est pas dégradée et $\|\vec{V_r}\|$ reste égal à V. Ces conditions sont à peu près respectées en pratique si les panneaux de gouverne sont recouverts d'un corps dur tel que l'oxyde de chrome, qui a encore l'avantage de bien résister à la corrosion.

On rappelle que les panneaux centraux 16 ont une surface égale à celle de la somme des panneaux extrêmes 17 et 18 du même mât 12 ou 13. Cette surface est notée S/2, et $\ell$ désigne la distance entre le centre d'inertie du satellite 10 et le centre du panneau central 16.

Or le débit massique de gaz sur le panneau de surface S/2, égal à

$$\frac{dm}{dt},$$

est donné aussi par l'expression

$$\left(\frac{S}{2} \cdot \sin\theta\right) \cdot \rho \cdot V,$$

ce qui conduit à la formule

$$F = 2\sin^2\theta\rho V^2 \frac{S}{2}.$$

On peut finalement déduire les couples aérodynamiques à appliquer :

$$C_{Ax} = 2\rho SV^2\ell \sum_{i=1}^{4} \frac{\sin 2\theta_i}{2} |\sin\theta_i|$$

$$C_{Ay} = 0$$

$$C_{Az} = 2\rho SV^2\ell \sum_{i=1}^{4} (-1)^i |\sin\theta_i|^3,$$

On veut alors obtenir des couples aérodynamiques réduits tels que :

$$C_{ax} = \frac{C_{Ax}}{K} = Bx. \frac{(\vec{B}.\vec{C})}{D.K}$$

où K=2ρSV2ℓ, et                    (III)

$$C_{az} = \frac{C_{Az}}{K} = Bz. \frac{(\vec{B}.\vec{C})}{D.K}$$

C'est-à-dire :

$$C_{ax} = \sum_{i=1}^{4} \frac{\sin 2\theta_i}{2} \left|\sin \theta_i\right| \quad \text{et} \quad C_{az} = \sum_{i=1}^{4} (-1)^i \left|\sin \theta_i\right|^3,$$

notés avec des 《 a 》 au lieu de 《 A 》 et qui seront désormais seuls considérés.

Les coefficients de portance et de traînée peuvent être évalués, pour chacun des panneaux, à $2\sin 2\theta|\sin\theta|$ et $4|\sin^3\theta|$ respectivement. La somme de ces derniers doit de préférence rester toujours faible. On préconise en conséquence d'appliquer les lois suivantes donnant les angles $\theta i$ :

1°) Si $C_{ax}\neq0$, c'est-à-dire de module supérieur à $10^{-4}$ par exemple :

a) Si

$$C_{az}\geq0 \quad \text{et} \quad 0 \leq C_2 \equiv \frac{C_{az}^2}{\left|C_{ax}\right|^3} \leq 1,$$

en posant

$$X = -\frac{1}{2} + \cos\{[\text{Arc} \cos (1 - 2C_2] / 3\}, \tag{IV}$$

$$\left|\sin \theta_1\right| = \left|C_{ax}\right|^{1/2}\left[\frac{1}{2} - \frac{1}{2}\left(1 - 4X^2\right)^{1/2}\right]^{1/2}$$

avec $\theta1$ du signe de $C_{ax}$,

$$\left|\sin\theta_2\right| = \left|C_{ax}\right|^{1/2} \left[\frac{1}{2} + \frac{1}{2}\left(1-4X^2\right)^{1/2}\right]^{1/2}$$

avec $\theta_2$ du signe de $\mathbf{C_{ax}}$,
et $\theta_3=\theta_4=0$.

b) Si $\mathbf{C_{az}}\geq0$ et $1\leq C_2$,
en posant

$$\alpha = \frac{1}{2}\left[C_2 + \left(C_2^2 - 1\right)^{1/2}\right]^{1/3} + \frac{1}{2}\left[C_2 - \left(C_2^2 - 1\right)^{1/2}\right]^{1/3},$$

$$\text{et} \quad S = S_2 + S_4 = \alpha^{1/2}\left[1 + \left(\frac{C_2^{1/2}}{\alpha^{3/2}} - 1\right)^{1/2}\right] \quad \left(\text{avec} \quad Si = \left|\sin\theta_i\right| / \left|C_{ax}\right|^{1/2}\right),$$

pour i de 1 à 4, alors :

$$|\sin\theta_2| = \frac{|C_{ax}|^{1/2}}{2}\left[S + S^{-1}\right],$$  (V)

avec $\theta_2$ du signe de $C_{ax}$, et :

$$|\sin\theta_4| = \frac{|C_{ax}|^{1/2}}{2}\left[S - S^{-1}\right],$$

avec $\theta_4$ du signe de $(-C_{ax})$,
et $\theta_1 = \theta_3 = 0$.

c) Si $C_{az} \leq 0$ et $0 \leq C_2 \leq 1$ avec X comme précédemment,

$$|\sin\theta_1| = |C_{ax}|^{1/2}\left[\frac{1}{2} + \frac{1}{2}\left(1 - 4X^2\right)^{1/2}\right]^{1/2}$$

avec $\theta_1$ du signe de $C_{ax}$,

$$|\sin\theta_2| = |C_{ax}|^{1/2}\left[\frac{1}{2} - \frac{1}{2}\left(1 - 4X^2\right)^{1/2}\right]^{1/2}$$  (VI)

avec $\theta_2$ du signe de $C_{ax}$,
et $\theta_3 = \theta_4 = 0$.

d) Si $C_{az} \leq 0$ et $1 \leq C_2$,
avec $\alpha$ comme précédemment,

$$\text{et } S = S_1 + S_3 = \alpha^{1/2}\left[1 + \left(C_2^{1/2}/\alpha^{3/2} - 1\right)^{1/2}\right],$$

$$|\sin\theta_1| = \frac{|C_{ax}|^{1/2}}{2}\left(S + S^{-1}\right),$$  (VII)

avec $\theta_1$ du signe de $C_{ax}$,

$$\left|\sin\theta_3\right| = \frac{\left|c_{ax}\right|^{1/2}}{2}\left(s - s^{-1}\right),$$

avec $\theta$ du signe de $-C_{ax}$,
et $\theta_2 = \theta_4 = 0$.

La figure 6 est une représentation graphique de ces fonctions.

2°) Si $C_{ax} \approx 0$, c'est-à-dire de module inférieur à $10^{-4}$ par exemple,

a) Si $C_{az} \geq 0$,

$$\theta_1 = \theta_3 = 0 \quad \text{et} \quad \left|\sin\theta_2\right| = \left|\sin\theta_4\right| = \left(\frac{C_{az}}{2}\right)^{1/3} \text{avec} \, \theta_2 = -\theta_4 \quad ; \qquad (VIII)$$

b) Si $C_{az} \leq 0$,

$$\theta_2 = \theta_4 = 0 \quad \text{et} \quad \left|\sin\theta_1\right| = \left|\sin\theta_3\right| = \left(\frac{C_{az}}{2}\right)^{1/3} \quad \text{avec} \, \theta_1 = -\theta_3 \qquad (IX).$$

Il est visible que, comme les bobinages 5 et 6 des coupleurs magnétiques 1, 2 et 3, le système de panneaux de gouverne est redondant et continue donc d'être utile quand un arrêt imprévu de fonctionnement surgit. Si on appelle G1 à G4 les panneaux ou paires de panneaux associés aux angles d'inclinaison $\theta_1$ à $\theta_4$, on préconise d'appliquer le procédé de substitution résumé par le tableau I, où on donne les gouvernes à utiliser pour remplacer une gouverne tombée en panne.

TABLEAU I

| GOUVERNE EN PANNE | | $G_1$ | $G_2$ | $G_3$ | $G_4$ |
|---|---|---|---|---|---|
| $c_{az} > 0$ | $C_2 < 1$ | $G_2$ et $G_3$ | $G_1$ et $G_4$ | $G_1$ et $G_2$ | $G_1$ et $G_2$ |
| | $C_2 > 1$ | $G_2$ et $G_4$ | $G_1$, $G_3$ et $G_4$ | $G_2$ et $G_4$ | $G_1$, $G_2$ et $G_3$ |
| $c_{az} < 0$ | $C_2 < 1$ | $G_2$ et $G_3$ | $G_1$ et $G_4$ | $G_1$ et $G_2$ | $G_1$ et $G_2$ |
| | $C_2 > 1$ | $G_2$, $G_3$ et $G_4$ | $G_1$ et $G_3$ | $G_1$, $G_2$ et $G_4$ | $G_1$ et $G_3$ |

Les angles dont il faut déplacer ces gouvernes dépendent non seulement des moments recherchés mais de la position de panne de l'autre gouverne, de sorte qu'il est très fastidieux de donner tous les cas possibles.

Il faut ajouter que les gouvernes aérodynamiques 15 peuvent être affectées au freinage du satellite 10 et donc à certaines corrections d'orbite. Il suffit d'obtenir

$$\theta_1 = -\theta_3 = \theta_2 = -\theta_4$$

pour produire des moments aérodynamiques nuls et une force de traînée totale proportionnelle à

$$|\sin\theta_i|^3 .$$

Les lois de commande données ici peuvent être facilement modifiées pour convenir à d'autres formes d'orbite. De même, la disposition des gouvernes donnée ici permet d'utiliser le satellite pour toutes les inclinaisons d'orbite basse.

**Revendications**

1. Satellite artificiel muni de générateurs magnétiques (1, 2, 3) de moments de rotation autour de trois axes principaux (X, Y, Z) du satellite, caractérisé en ce qu'il comprend des panneaux extérieurs (16, 17, 18) tournants pour fournir des moments aérodynamiques autour de deux des axes principaux (X,Z ou X,Y) selon le type de satellite et l'orbite du satellite en fonction de lois de commande associant les générateurs magnétiques et les panneaux pour leur faire produire des moments variables.

2. Satellite artificiel suivant la revendication 1, caractérisé en ce que les panneaux extérieurs sont disposés symétriquement par rapport à un centre d'inertie du satellite.

3. Satellite artificiel suivant la revendication 2, caractérisé en ce que les panneaux extérieurs sont au nombre de deux paires et tournent autour d'axes sensiblement alignés.

4. Satellite artificiel suivant la revendication 3, caractérisé en ce que les panneaux de chacune des paires ont une surface identique et consistent en un panneau central (16) et deux demi-panneaux (17, 18) identiques, solidaires et encadrant le panneau central.

5. Procédé de commande d'un satellite artificiel selon la revendication 1 et en orbite autour d'une planète et plongé dans une atmosphère et un champ magnétique, caractérisé en ce qu'il consiste à mesurer ou estimer périodiquement le champ magnétique (B) de la planète par rapport aux axes principaux du satellite, et à calculer des moments de rotation à produire autour des axes principaux par les générateurs magnétiques et les panneaux extérieurs.

6. Procédé de commande d'un satellite artificiel selon la revendication 5, caractérisé en ce qu'il consiste à calculer et à produire par les générateurs magnétiques des moments de rotation pour lesquels les moments de rotation produits par les panneaux extérieurs ont une valeur globale minimale.

7. Procédé de commande d'un satellite artificiel selon la revendication 5, caractérisé en ce que le satellite parcourt une orbite quasi polaire et en ce que les moments produits par les panneaux extérieurs sont des moments de roulis et de lacet.

8. Procédé de commande d'un satellite artificiel selon la revendication 5, caractérisé en ce que le satellite parcourt une orbite équatoriale et les moments produits par les panneaux extérieurs sont des moments de tangage et de roulis.

9. Procédé de commande d'un satellite artificiel selon la revendication 5, caractérisé en ce que les panneaux extérieurs sont commandés de façon à minimiser les efforts de traînée produits par l'atmosphère.

10. Procédé de commande d'un satellite artificiel selon la revendication 6, caractérisé en ce que les moments magnétiques (M) sont produits conformément aux formules

$$M_X = \left[ B_y C_z - B_z C_y - B_y B_z \left( \frac{\vec{B}.\ \vec{C}}{D} \right) \right] / \left\| \vec{B} \right\|^2$$

$$M_y = \left[ B_z C_x - B_x C_z \right] / \left\| \vec{B} \right\|^2$$

$$M_z = \left[ B_x C_y - B_y C_x + B_x B_y \left( \frac{\vec{B}.\ \vec{C}}{D} \right) \right] / \left\| \vec{B} \right\|^2$$

où x, y et z désignent les axes principaux du satellite,

$B_x$, $B_y$ et $B_z$ les composantes du champ magnétique ambiant $\vec{B}$ selon les axes principaux produits sur le satellite par les générateurs magnétiques et les panneaux selon les axes principaux, et

$C_x$, $C_y$ et $C_z$ les composantes du moment total $\vec{C}$ produit sur le satellite par les générateurs magnétiques et les panneaux selon les axes principaux, et

où $D = B_x^2 + B_z^2$ et

$$\vec{B}.\ \vec{C} = B_x C_x + B_y C_y + B_z C_z .$$

**11.** Procédé de commande d'un satellite artificiel selon les revendications 9 et 10, caractérisé en ce que les panneaux extérieurs sont commandés conformément aux formules suivantes, pour un satellite pourvu de quatre panneaux extérieurs de surfaces égales et répartis par paires symétriques en faisant des angles $\theta_1$ à $\theta_4$ à une direction de déplacement du satellite, les panneaux d'une des paires faisant les angles $\theta_1$ et $\theta_2$, ceux de l'autre des paires les angles $\theta_3$ et $\theta_4$ et les panneaux faisant les angles $\theta_1$ et $\theta_3$ d'une part, $\theta_2$ et $\theta_4$ d'autre part, étant situés latéralement d'un même côté du satellite, et en notant :

$$C_{ax} = \sum_{i=1}^{4} \frac{\sin 2\theta_i}{2} \left| \sin \theta_i \right| \quad \text{et} \quad C_{az} = \sum_{i=1}^{4} (-1)^i \left| \sin \theta_i \right|^3 ,$$

1°) Si $C_{ax} \neq 0$ :

    a) Si

$$C_{az} \geq 0 \quad \text{et} \quad 0 \leq C_2 \equiv \frac{C_{az}^2}{\left| C_{ax} \right|^3} \leq 1 ,$$

    en posant

$$X = -\frac{1}{2} + \cos\{[\text{Arc cos } (1 - 2C_2)] / 3\},$$

$$\left|\sin \theta_1\right| = \left|C_{ax}\right|^{1/2} \left[\frac{1}{2} - \frac{1}{2}\left(1 - 4X^2\right)^{1/2}\right]^{1/2}$$

avec $\theta 1$ du signe de $C_{ax}$,

$$\left|\sin \theta_2\right| = \left|C_{ax}\right|^{1/2} \left[\frac{1}{2} + \frac{1}{2}\left(1 - 4X^2\right)^{1/2}\right]^{1/2}$$

avec $\theta_2$ du signe de $C_{ax}$,
et $\theta_3 = \theta_4 = 0$.

b) Si $C_{az} \geq O$ et $1 \leq C_2$,
en posant

$$\alpha = \frac{1}{2}[C_2 + (C_2^2 - 1)^{1/2}]^{1/3} + \frac{1}{2}[C_2 - (C_2^2 - 1)^{1/2}]^{1/3},$$

et

$$S = S_2 + S_4 = \alpha^{1/2}\left[1 + \left(\frac{C_2^{1/2}}{\alpha^{3/2}} - 1\right)^{1/2}\right]\left(\text{avec } Si = \left|\sin \theta_i\right| / \left|C_{ax}\right|^{1/2}\right)$$

pour i de 1 à 4, alors :

$$\left|\sin \theta_2\right| = \frac{\left|C_{ax}\right|^{1/2}}{2}\left[S + S^{-1}\right],$$

avec $\theta_2$ du signe de $C_{ax}$, et :

$$\left|\sin \theta_4\right| = \frac{\left|C_{ax}\right|^{1/2}}{2}\left[S - S^{-1}\right],$$

avec $\theta_4$ du signe de $(-C_{ax})$,
et $\theta_1 = \theta_3 = 0$.

c) Si $C_{az} \leq 0$ et $0 \leq C_2 \leq 1$ avec X comme précédemment,

$$\left|\sin \theta_1\right| = \left|C_{ax}\right|^{1/2} \left[\frac{1}{2} + \frac{1}{2}\left(1 - 4X^2\right)^{1/2}\right]^{1/2}$$

avec $\theta_1$ du signe de $C_{ax}$,

$$\left|\sin \theta_2\right| = \left|C_{ax}\right|^{1/2} \left[\frac{1}{2} - \frac{1}{2}\left(1 - 4X^2\right)^{1/2}\right]^{1/2}$$

avec $\theta_2$ du signe de $C_{ax}$,
et $\theta_3 = \theta_4 = 0$.

d) Si $C_{az} \leq 0$ et $1 \leq C_2$,
avec $\alpha$ comme précédemment,
et

$$S = S_1 + S_3 = \alpha^{1/2}[1 + (C_2^{1/2} / \alpha^{3/2} - 1)^{1/2}],$$

$$\left|\sin\theta_1\right| = \frac{\left|C_{ax}\right|^{1/2}}{2}\left(S + S^{-1}\right),$$

avec $\theta_1$ du signe de $C_{ax}$,

$$\left|\sin\theta_3\right| = \frac{\left|C_{ax}\right|^{1/2}}{2}\left(S - S^{-1}\right),$$

et $\theta_2 = \theta_4 = 0$.

2. Si $C_{ax} \approx 0$, c'est-à-dire de module inférieur à $10^{-4}$ par exemple,

a) Si $C_{az} \geq 0$,

$$\theta_1 = \theta_3 = 0 \text{ et } \left|\sin\theta_2\right| = \left|\sin\theta_4\right| = \left(\frac{C_{az}}{2}\right)^{1/3} \text{ avec } \theta_2 = -\theta_4 ;$$

b) Si $C_{az} \leq 0$,

$$\theta_2 = \theta_4 = 0 \text{ et } \left|\sin\theta_1\right| = \left|\sin\theta_3\right| = \left(\frac{C_{az}}{2}\right)^{1/3} \text{ avec } \theta_1 = -\theta_3.$$

## Claims

1. Artificial satellite equipped with magnetic generators (1, 2, 3) of rotation moments around three principal axes (X, Y, Z) of the satellite, characterized in that it comprises turning external panels (16, 17, 18) to supply aerodynamic rotation moments around two of the principal axes (X, Z or X, Y), depending on the type and orbit of the satellite in function of command laws associating the magnetic generators and the panels in order to induce them to produce variable moments.

2. Artificial satellite according to claim 1, characterized in that the external panels are arranged symmetrically in relation to an inertia centre of the satellite.

3. Artificial satellite according to claim 2, characterized in that there are tow pairs of external panels which turn around approximately aligned axes.

4. Artificial satellite according to claim 3, characterized in that the panels of each of the pairs have an identical surface and consist of a central panel (16) and two identical semi-panels (17, 18), solidly attached to and framing the central panel.

5. Control process of an artificial satellite according to claim 1 and in orbit around a planet and immersed in an atmosphere and a magnetic field, characterized in that it consists of periodically measuring or estimating the planet's magnetic field (B) in relation to the principal axes of the satellite, and of calculating the rotation moments to be produced around the principal axes by the magnetic generators and the external panels.

6. Control process of an artificial satellite according to claim 5, characterized in that it consists of calculating and producing by the magnetic generators rotation moments for which the rotation moments produced by the external panels have a minimum global value.

7. Control process of an artificial satellite according to claim 5, characterized in that the satellite travels in a quasi-polar orbit and in that the moments produced by the external panels are rolling and yawing moments.

8. Control process of an artificial satellite according to claim 5, characterized in that the satellite travels in an equatorial orbit and in that the moments produced by the external panels are pitching and rolling moments.

9. Control process of an artificial satellite according to claim 5, characterized in that the external panels are controlled in such a way as to minimize the drag efforts produced by the atmosphere.

10. Control process of an artificial satellite according to claim 6, characterized in that the magnetic moments are produced in conformity with the formulae:

$$M_x = \left[ B_y C_z - B_z C_y - B_y B_z \left( \frac{\overline{B}.\overline{C}}{D} \right) \right] \Big/ \left\| \overline{B} \right\|^2$$

$$M_y = \left[ B_z C_x - B_x C_z \right] \Big/ \left\| \overline{B} \right\|^2$$

$$M_z = \left[ B_x C_y - B_y C_x + B_x B_y \left( \frac{\overline{B}.\overline{C}}{D} \right) \right] \Big/ \left\| \overline{B} \right\|^2$$

in which x, y and z designate the principal axes of the satellite,
$B_x$, $B_y$ and $B_z$ the components of the ambient magnetic field $\overline{B}$ along the principal axes produced on the satellite by the magnetic generators and the panels along the principal axes and
$C_x$, $C_y$ and $C_z$ the components of the total moment $\overline{C}$ produced on the satellite by the magnetic generators and the panels along the principal axes and
where $D=B_x^2+B_z^2$ and $\overline{B}.\overline{C}=B_x C_x + B_y C_y + B_z C_z$.

11. Control process of an artificial satellite according to claims 9 and 10, characterized in that the external panels are controlled in accordance with the following formulae, for a satellite provided with four external panels having equal surfaces and distributed in symmetrical pairs forming angles $\theta_1$ to $\theta_4$ for a satellite displacement direction, the panels of one of the pairs forming angles $\theta_1$ and $\theta_2$ and those of the other of the pairs the angles $\theta_3$ and $\theta_4$ and the panels forming the angles $\theta_1$ and $\theta_3$ on the one hand and $\theta_2$ and $\theta_4$ on the other being positioned laterally of a same side of the satellite and by designating:

$$C_{ax} = \sum_{i=1}^{4} \frac{\sin 2\theta_i}{2} |\sin \theta_i| \quad \text{and} \quad C_{az} = \sum_{i=1}^{4} (-1)^i |\sin \theta_i|^3$$

1) if $C_{ax} \neq 0$ :

    a) If

$$C_{az} \geq 0 \text{ and } 0 \leq C_2 \equiv \frac{C_{az}^{\,2}}{|C_{ax}|^3} \leq 1,$$

    and supposing

$$X = -\frac{1}{2} + \cos\{[\text{Arc cos }(1 - 2C_2)]/3\},$$

$$|\sin\theta_1| = |C_{ax}|^{1/2}\left[\frac{1}{2} - \frac{1}{2}(1 - 4X^2)^{1/2}\right]^{1/2}$$

    with $\theta_1$ of the sign of $C_{ax}$,

$$|\sin\theta_2| = |C_{ax}|^{1/2}\left[\frac{1}{2} + \frac{1}{2}(1 - 4X^2)^{1/2}\right]^{1/2}{}^{1/2}$$

    with $\theta_2$ of the sign of $C_{ax}$,
    and $\theta_3 = \theta_4 = 0$;

    b) If $C_{az} \geq 0$ and $1 \leq C_2$,
    and supposing

$$\alpha = \frac{1}{2}[C_2 + (C_2^2 - 1)^{1/2}]^{1/3} + \frac{1}{2}[C_2 - (C_2^2 - 1)^{1/2}]^{1/3}$$

    and

$$S = S_2 + S_4 = \alpha^{1/2}\left[1 + \left(\frac{c_2^{1/2}}{\alpha^{3/2}} - 1\right)^{1/2}\right] \text{(with } S_i = |\sin\theta_i|/|C_{ax}|^{1/2})$$

    for i 1 to 4, then:

$$|\sin\theta_2| = \frac{|C_{ax}|^{1/2}}{2}[S + S^{-1}],$$

    with $\theta_2$ of the sign of $C_{ax}$, and:

$$|\sin\theta_4| = \frac{|C_{ax}|^{1/2}}{2}[S - S^{-1}],$$

    with $\theta_4$ of the sign of $(-C_{ax})$
    and $\theta_1 = \theta_3 = 0$;

    c) if $C_{az} \leq 0$ and $0 \leq C_2 \leq 1$ with X as previously,

$$|\sin\theta_1| = |C_{ax}|^{1/2}\left[\frac{1}{2} + \frac{1}{2}(1 - 4X^2)^{1/2}\right]^{1/2}$$

with $\theta_1$ of the sign of $C_{ax}$,

$$|\sin\theta_2| = |C_{ax}|^{1/2}\left[\frac{1}{2} - \frac{1}{2}(1 - 4X^2)^{1/2}\right]^{1/2}$$

with $\theta_2$ of the sign of $C_{ax}$
and $\theta_3 = \theta_4 = 0$.

d) if $C_{az} \leq 0$ and $1 \leq C_2$,
with $\alpha$ as previously,
and

$$S = S_1 + S_3 = \alpha^{1/2}[1 + (C_2^{1/2} / \alpha^{3/2} - 1)^{1/2}]$$

$$|\sin\theta_1| = \frac{|C_{ax}|^{1/2}}{2}(S + S^{-1}),$$

with $\theta_1$ of the sign of $C_{ax}$,

$$|\sin\theta_3| = \frac{|C_{ax}|^{1/2}}{2}(S - S^{-1}),$$

and $\theta_2 = \theta_4 = 0$;

2) If $C_{ax} \approx 0$, i.e. of modulus lower than e.g. $10^{-4}$,

a) if $C_{az} \geq 0$,

$$\theta_1 = \theta_3 = 0 \text{ and } |\sin\theta_2| = |\sin\theta_4| = \left(\frac{C_{az}}{2}\right)^{1/3} \text{ with } \theta_2 = -\theta_4;$$

b) if $C_{az} \leq 0$,

$$\theta_2 = \theta_4 = 0 \text{ and } |\sin\theta_1| = |\sin\theta_3| = \left(\frac{C_{az}}{2}\right)^{1/3} \text{ with } \theta_1 = -\theta_3.$$

**Patentansprüche**

1. Künstlicher Satellit mit magnetischen Drehmomentgebern (1, 2, 3) um drei Hauptachsen (X, Y, Z) des Satelliten herum,
**dadurch gekennzeichnet,**
daß er dreh- bzw. schwenkbare Außentafeln bzw. -panels (16, 17, 18) umfaßt, um aerodynamische Momente um zwei der drei Hauptachsen (X,Z oder X,Y) zu liefern, je nach Satellitentyp und Satellitenumlaufbahn, in Abhängigkeit von Steuergesetzen, welche die magnetischen Geber und die Panels verbinden, damit sie variable Momente erzeugen.

2. Künstlicher Satellit nach Anspruch 1, dadurch gekennzeichnet, daß die Außenpanels zwei Paare umfassen und symmetrisch angeordnet sind in bezug auf ein Trägheitszentrum des Satelliten.

3. Künstlicher Satellit nach Anspruch 2, dadurch gekennzeichnet, daß die Außenpanels zwei Paare umfassen und sich um im wesentlichen fluchtende Achsen drehen.

4. Künstlicher Satellit nach Anspruch 3, dadurch gekennzeichnet, daß die Panels jedes Paars eine identische Fläche haben und gebildet werden durch ein zentrales Panel (16) und zwei identische Halbpanel (17, 18), die aus einem Stück sind und das zentrale Panel umrahmen.

5. Verfahren zum Steuern eines künstlichen Satelliten nach Anspruch 1, der sich im Orbit um einen Planeten und in einer Atmosphäre und einem Magnetfeld befindet,
   **dadurch gekennzeichnet,**
   daß es darin besteht, periodisch das Magnetfeld (B) des Planeten in bezug auf die Hauptachsen des Satelliten zu messen und durch die magnetischen Geber und die Außenpanels um die Hauptachsen herum zu erzeugende Drehmomente zu berechnen.

6. Verfahren zum Steuern eines künstlichen Satelliten nach Anspruch 5, dadurch gekennzeichnet, daß es darin besteht, Drehmomente zu berechnen und durch die magnetischen Geber zu erzeugen, bei denen die durch die Außenpanels erzeugten Drehmomente einen minimalen Gesamtwert haben.

7. Verfahren zum Steuern eines künstlichen Satelliten nach Anspruch 5, dadurch gekennzeichnet, daß der Satellit eine quasipolare Umlaufbahn durchläuft, und dadurch, daß die durch die Außenpanels erzeugten Drehmomente Roll- und Giermomente sind.

8. Verfahren zum Steuern eines künstlichen Satelliten nach Anspruch 5, dadurch gekennzeichnet, daß der Satellit eine äquatoriale Umlaufbahn durchläuft und die durch die Außenpanels erzeugten Momente Nick- und Rollmomente sind.

9. Verfahren zum Steuern eines künstlichen Satelliten nach Anspruch 5, dadurch gekennzeichnet, daß die Außenpanels gesteuert werden, um die durch die Atmosphäre erzeugten Luftwiderstandskräfte zu minimieren.

10. Verfahren zum Steuern eines künstlichen Satelliten nach Anspruch 6, dadurch gekennzeichnet, daß die magnetischen Momente (M) erzeugt werden nach den Formeln

$$M_X = \left[ B_y C_z - B_z C_y - B_y B_z \left( \frac{\vec{B} \cdot \vec{C}}{D} \right) \right] \bigg/ \left\| \vec{B} \right\|^2$$

$$M_y = \left[ B_z C_x - B_x C_z \right] \bigg/ \left\| \vec{B} \right\|^2$$

$$M_z = \left[ B_x C_y - B_y C_x + B_x B_y \left( \frac{\vec{B} \cdot \vec{C}}{D} \right) \right] \bigg/ \left\| \vec{B} \right\|^2$$

wo x, y und z die Hauptachsen des Satelliten bezeichnen,
$B_x$, $B_y$ und $B_z$ die Komponenten des Umgebungsmagnetfelds $\overline{B}$ entsprechend den Hauptachsen bezeichnen, im Satelliten erzeugt durch die magnetischen Geber und die Panels entsprechend den Hauptachsen, und
$C_x$, $C_y$ und $C_z$ die Komponenten des Gesamtmoments $\overline{C}$ bezeichnen, im Satelliten erzeugt durch die magnetischen Geber und die Panels entsprechend den Hauptachsen, und
wo $D = B_x^2 + B_z^2$ und $\overline{B} \cdot \overline{C} = B_x C_x + B_y C_y + B_z C_z$.

11. Verfahren zum Steuern eines künstlichen Satelliten nach den Ansprüchen 9 und 10, dadurch gekennzeichnet, daß die Außenpanels den folgenden Formeln entsprechend gesteuert werden, wenn der Satellit vier Außenpanels aufweist, flächengleich und paarweise symmetrisch angeordnet, indem sie Winkel $\theta_1$ bis $\theta_4$ mit einer Fortbewegungs-richtung des Satelliten bilden, wobei die Panels des einen Paars die Winkel $\theta_1$ und $\theta_2$ und die des anderen Paars die Winkel $\theta_3$ und $\theta_4$ bilden und die Panels, die einerseits die Winkel $\theta_1$ und $\theta_3$ und andererseits die Winkel $\theta_2$ und $\theta_4$ bilden, sich seitlich auf derselben Seite des Satelliten befinden, und dadurch, daß man schreibt:

$$C_{ax} = \sum_{i=1}^{4} \frac{\sin 2\theta_i}{2} |\sin \theta_i| \text{ et } C_{az} = \sum_{i=1}^{4} (-1)^i |\sin \theta_i|^3,$$

1°) Wenn $C_{ax} \neq 0$ :

a) Wenn $C_{az} \geq 0$ und

$$0 \leq C_2 \equiv \frac{C_{az}^2}{|C_{ax}|^3} \leq 1,$$

indem man schreibt

$$X = -\frac{1}{2} + \cos\{[\text{Arc cos } (1 - 2C_2)] / 3\},$$

$$|\sin \theta_1| = |C_{ax}|^{1/2} \left[\frac{1}{2} - \frac{1}{2}(1 - 4X^2)^{1/2}\right]^{1/2}$$

mit $\theta 1$ mit dem Vorzeichen von $C_{ax}$,

$$|\sin \theta_2| = |C_{ax}|^{1/2} \left[\frac{1}{2} + \frac{1}{2}(1 - 4X^2)^{1/2}\right]^{1/2}$$

mit $\theta 2$ mit dem Vorzeichen von $C_{ax}$,
und $\theta_3 = \theta_4 = 0$.

b) Wenn $C_{az} \geq 0$ und $1 \leq C_2$
indem man schreibt

$$\alpha = \frac{1}{2}[C_2 + (C_2^2 - 1)^{1/2}]^{1/3} + \frac{1}{2}[C_2 - (C_2^2 - 1)^{1/2}]^{1/3},$$

und

$$S = S_2 + S_4 = \alpha^{1/2} \left[1 + \left(\frac{C_2^{1/2}}{\alpha^{3/2}} - 1\right)^{1/2}\right] (\text{mit } S_i = |\sin \theta_i| / |C_{ax}|^{1/2})$$

für i von 1 bis 4, dann:

$$|\sin \theta_2| = \frac{|C_{ax}|^{1/2}}{2}[S + S^{-1}],$$

mit $\theta_2$ mit dem Vorzeichen von $C_{ax}$, und:

$$|\sin \theta_4| = \frac{|C_{ax}|^{1/2}}{2}[S - S^{-1}],$$

mit $\theta_4$ mit dem Vorzeichen von $(-C_{ax})$,
und $\theta_1=\theta_3=0$.

c) Wenn $C_{az}\leq 0$ und $0\leq C_2\leq 1$ mit X wie vorhergehend,

$$|\sin \theta_1| = |C_{ax}|^{1/2}\left[\frac{1}{2} + \frac{1}{2}(1 - 4X^2)^{1/2}\right]^{1/2}$$

mit $\theta_1$ mit dem Vorzeichen von $C_{ax}$,

$$|\sin \theta_2| = |C_{ax}|^{1/2}\left[\frac{1}{2} - \frac{1}{2}(1 - 4X^2)^{1/2}\right]^{1/2}$$

mit $\theta_2$ mit dem Vorzeichen von $C_{ax}$,
und $\theta_3=\theta_4=0$.

d) Wenn $C_{az}\leq 0$ und $1\leq C_2$,
mit $\alpha$ wie vorhergehend,
und

$$S = S_1 + S_3 = \alpha^{1/2}[1 + (C_2^{1/2} / \alpha^{3/2} - 1)^{1/2}],$$

$$|\sin \theta_1| = \frac{|C_{ax}|^{1/2}}{2}(S + S^{-1}),$$

mit $\theta_1$ mit dem Vorzeichen von $C_{ax}$,

$$|\sin \theta_3| = \frac{|C_{ax}|^{1/2}}{2}(S - S^{-1}),$$

und $\theta_2=\theta_4=0$.

2°) Wenn $C_{ax}\approx 0$, das heißt mit kleinerem Modul als z.B. $10^{-4}$,

a) Wenn $C_{az}\geq 0$,

$$\theta_1 = \theta_3 = 0 \text{ et } |\sin \theta_2| = |\sin \theta_4| = \left(\frac{C_{az}}{2}\right)^{1/3} \text{mit } \theta_2 = -\theta_4 ;$$

b) Wenn $C_{az}\leq 0$,

$$\theta_2 = \theta_4 = 0 \text{ et } |\sin\theta_1| = |\sin \theta_3| = \left(\frac{C_{az}}{2}\right)^{1/3} \text{ mit } \theta_1 = \theta_3.$$

FIG. 1

EP 0 754 143 B1

FIG. 2

EP 0 754 143 B1

FIG. 3

FIG. 4

EP 0 754 143 B1

FIG. 5

EP 0 754 143 B1

$$|Sin\theta_i| / |C_{ax}|^{1/2} = s_i$$

FIG. 6

$\theta_2$ si $C_{az} > 0$,
ou $\theta_1$ si $C_{az} < 0$

$\theta_2$ si $C_{az} > 0$,
ou $\theta_1$ si $C_{az} < 0$

1,5

1

$\theta_1$ si $C_{az} > 0$,
ou $\theta_2$ si $C_{az} < 0$

0,5

$\theta_1$ si $C_{az} > 0$,
ou $\theta_2$ si $C_{az} < 0$

$$c_2 = \frac{C_{az}^2}{|C_{ax}|^3}$$

0

0,5    1    5    10    15

FIG. 7